# EUROPEAN PATENT APPLICATION

(11) **EP 3 824 723 A2**
(43) Date of publication of application: **26.05.2021**
(21) Application number: 20208310.1
(22) Date of filing: 18.11.2020
(51) Int. Cl.: A01K 7/02

(54) **TWO-LAYER PET WATERER**

(30) Priority: 19.11.2019 CN 201921996086 U; 10.01.2020 US 202016739146; 06.11.2020 US 202017092016
(71) Applicant: SHENZHEN LIYI99.COM, LTD., Shenzhen 518107 (CN)
(72) Inventor: Wang, Xuzhong, Shenzhen 518107 (CN)
(74) Representative: Uexküll & Stolberg

(57) **Abstract**

A two-layer pet waterer includes a water tank, a pump arranged in the water tank, a first drinking plate supported on a second drinking plate, and the second drinking plate detachably residing on the top of the water tank. A first hollow pipe has an upper end, which forms a fountain opening on the first drinking plate, and a lower end, which extends downwards through the second drinking plate to connect a pump outlet of the pump. Water in the water tank is pumped upwards from the pump outlet into the first hollow pipe and then flows out from the fountain opening to the first drinking plate and then overflows into the second drinking plate when the first drinking plate is full.

## Description

### TECHNICAL FIELD

The present invention relates to a pet waterer, which is special for pets, and belongs to the technical field of pet supplies.

### BACKGROUND

Existing pet waterers can be classified into waterers for small pets and waterers for medium and large pets.

The waterer for small pets utilizes a special water pump to pump water into a drinking plate for pet drinking, and then the water flow back to a water tank from the drinking plate so as to form a circulation of the water. Therefore, the pet can drink clean water. Therefore, the waterer for the small pets has the advantages that the form of a nozzle is diverse, and the water is discharged in various manners, which can attract more attention of the pets to a certain degree so as to increase the water drinking times of the pets. However, the waterer for the small pets has the disadvantages that the water storage area of a drinking plate is very small, and the water storage capacity of the water tank is small, so such waterer is only suitable for small pets. Additionally, such waterer is relatively high so that the pet needs to put its front paws on the edge of the waterer when drinking the water.

The waterer for medium and large pets uses one container as the drinking plate and the water tank such that the water drinking area is large and can meet a requirement that the medium and large pets need to drink a lot of water. The waterer for medium and large pets similarly uses a special pump to pump water, and the water is sprayed out through a water outlet and then flows back to the drinking plate. Additionally, a water drinking position is relatively low. The drinking plate and the water tank are the same container, so, the pet hairs and the food residues are always left in the drinking plate, and a user can see these hairs and food residues so that the user needs to change the water frequently.

### SUMMARY

A technical problem to be solved by the present invention is to increase a water drinking area for the pet and a water storage capacity of a drinking plate in order to meet the water drinking requirement of medium and large pets.

To solve the above-mentioned technical problems, the present invention adopts the following technical solution.

In one example, a two-layer pet waterer comprises a water tank, a pump arranged in the water tank, a first drinking plate supported on a second drinking plate, and the second drinking plate detachably residing on the top of the water tank, the first and second drinking plates being adapted to contain a quantity of water, a first hollow pipe with an upper end which forms a fountain opening on the first drinking plate, and a lower end which extends downwards through the second drinking plate to connect a pump outlet of the pump, wherein water in the water tank is pumped upwards from the pump outlet into the first hollow pipe and then flows out from the fountain opening to the first drinking plate and then overflows into the second drinking plate when the first drinking plate is full.

The foregoing example of a two-layer pet waterer may include any one or more of the following optional features, structures, and/or forms.

In one optional form, the pump is detachable from the water tank.

In another optional form, the pump comprises a suction cup for detachable connection to the water tank.

In another optional form, a filter is arranged upstream of the pump inlet.

In another optional form, the filter comprises polypropylene fibers.

In another optional form, the pump includes a low level sensor.

In another optional form, the pump automatically stops when the low level sensor senses a low water level in the water tank.

In another optional form, an indicator is activated when the low level sensor senses the low water level.

In another optional form, the indicator is a LED light.

In another optional form, a transparent window is disposed on a sidewall of the water tank and the indicator is viewable through the transparent window.

In another optional form, a plurality of foot pads is arranged on a bottom of the water tank.

In another optional form, a surface area of the first drinking plate is less than a surface area of the second drinking plate.

In another optional form, the first drinking plate includes an outer sidewall that is supported on the second drinking plate, and at least one overflow hole is arranged in the outer sidewall, and the overflow hole is fluidly connected to an inner space of the water tank.

In another optional form, the second drinking plate includes an outer sidewall and an overflow water container disposed within the outer sidewall.

In another optional form, a first through hole is formed at a bottom of the overflow water container.

In another optional form, a second through hole is formed in the bottom of the second drinking plate, and the second through hole is in fluid communication with the inner space of the water tank.

In another optional form, a second hollow pipe connects the inner space of the water tank and the overflow water container, the first hollow pipe extending through the second hollow pipe to connect to the pump outlet.

In another optional form, the first drinking plate has an inner flange surrounding the fountain opening.

In another optional form, the first drinking plate has an outer flange along an outer periphery.

In another optional form, the outer flange includes a gap for overflow water to flow from the first drinking plate into the second drinking plate.

Other features and advantages of the present invention will be described in the following specification, and some of these will become apparent from the description or be understood by implementing the present invention. The objectives and other advantages of the present invention can be implemented or obtained by structures specifically indicated in the written specification, claims, and accompanying drawings.

### BRIEF DESCRIPTION OF THE DRAWINGS

The present invention is described in detail below with reference to the accompanying drawings.
FIG. 1 is a perspective view of a two-layer pet waterer.
FIG. 2 is an exploded view of the two-layer pet waterer of FIG. 1.
FIG. 3 is a bottom perspective view of a second drinking plate of the two-layer pet waterer of FIG. 1.
FIG. 4 is a cross-sectional view of the two-layer pet waterer of FIG. 1.
FIG. 5 is a side perspective view of a filter element frame of the two-layer pet waterer of FIG. 1.
FIG. 6 is an exploded view of a filter element of the two-layer pet waterer of FIG. 1.

### DESCRIPTION

The following describes the present invention in detail with reference to an example embodiment.

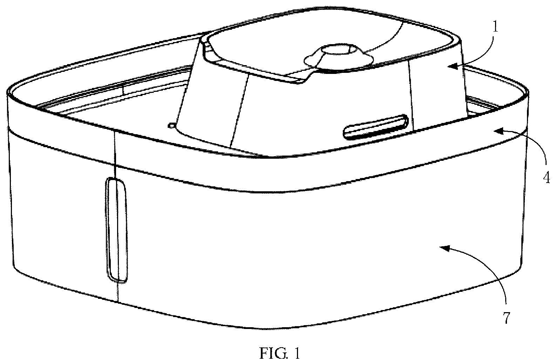

According to one example embodiment, as illustrated in FIG. 1 to FIG. 4, a two-layer pet waterer comprises a first drinking plate 1, a second drinking plate 4, a water tank 7 and a pump 11. The first drinking plate 1 and the second drinking plate are adapted to hold a quantity of water that is accessible to pets for drinking. The first drinking plate 1 and the second drinking plate 4 may take other forms suitable for holding a quantity of water, such as cups, dishes, bowls, basins, pots, pans, saucers, or any other structure capable of holding a quantity of water that allows access by pets for drinking. The water tank 7 is closed at a bottom, but open at a top, and may be used to hold water for pets to drink. In one example, a transparent window 8 is arranged on at least one sidewall of the water tank 7, thereby facilitating a user's view of the water level or of an optional LED light (if included) inside the water tank 7. The pump 11 is detachably attached in the water tank 7. In one example, the pump 11 may be attached in the bottom of the water tank 7 by suction cups 111 provided at the bottom of the pump 11. In one example, a filter, such as a polypropylene fiber filter 10, is arranged in front of a pump inlet of the pump 11. The polypropylene fiber filter 10 is configured to pre-filter water flowing into the pump 11. Preferably, the pump 11 is a low-water-level pump which automatically stops operating, and activates a LED light flash, when the water level is too low. In one example, a plurality of foot pads 9 is arranged at the bottom of the water tank 7.

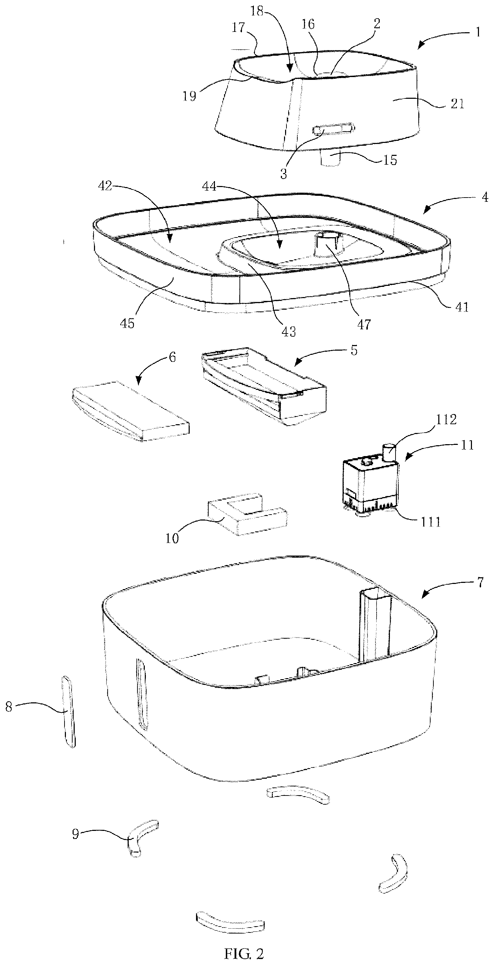

The second drinking plate 4 is detachably mounted on the top of the water tank 7 and covers the water tank 7. Referring to FIG. 2, the second drinking plate 4 has a lap edge 41 corresponding to shape of the top of the water tank 7.

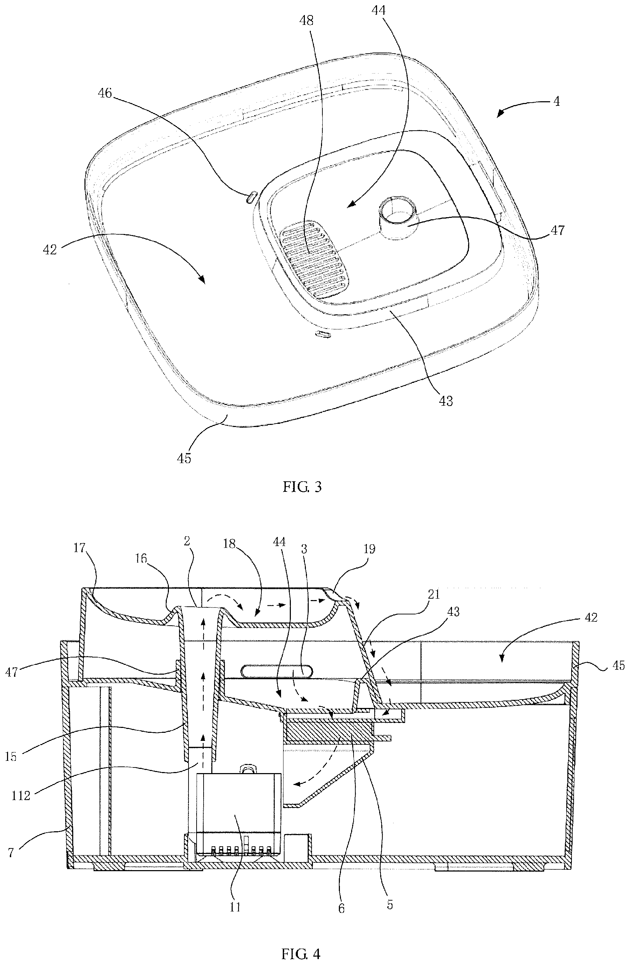

The first drinking plate 1 is supported by the second drinking plate 4, and in one example, the upper surface area of the first drinking plate 1 is smaller than the second drinking plate 4. Specifically as shown in FIG. 2 and FIG. 4, a first hollow pipe 15 extends from the first drinking plate 1 downwards to the inner space of the water tank 7, an upper end of the first hollow pipe 15 forms a fountain opening 2 in the first drinking plate 1, and the lower end of the first hollow pipe 15 extends downwards to go through the second drinking plate 4 to connect a pump outlet 112 of the pump 11, wherein water in the water tank 7 is pumped upwards from the pump outlet 112 into the first hollow pipe 15, and then the water flows out from the fountain opening 2 into the first drinking plate 1, and then the water overflows into the second drinking plate 4 when the first drinking plate 1 is full.

Further as shown in FIG. 2 and FIG. 4, the first drinking plate 1 further has an outer sidewall 21 extending downwards and supported on the second drinking plate 4, and at least one overflow hole 3 is arranged on the outer sidewall 21, the at least one overflow hole 3 being directly communicated with an inner space of water tank 7. Water in the second drinking plate 4 may flow directly back into the water tank 7 when the second drinking plate 4 is full through the at least one overflow hole 3.

Further as shown in FIG. 2 to FIG. 4, the second drinking plate 4 comprises a first outer flange 45 along its outer periphery, thereby forming a first drinking water container 42 between the outer sidewall 21 and the first outer flange 45, and an overflow water container 44 is formed within the outer sidewall 21, and at least one first through hole 48 is formed at the bottom of the overflow water container 44. The first outer flange 45 is higher than the overflow hole 3 so as to ensure that water in the first drinking water container 42 only overflows from the overflow hole 3 into the overflow water container 44, and then flow back into the water tank 7 via the first through hole 48.

Further as shown in FIG. 2 to FIG. 4, the second drinking plate 4 further comprises a fence 43 on its upper surface, thereby the first drinking water container 42 is formed between the outer sidewall 21 and the fence 43, and the overflow water container 44 is formed within the fence 43. The outer sidewall 21 corresponds to outer shape of the fence 43, and the first drinking plate 1 covers on the periphery of the fence 43 by the outer sidewall 21. The overflow hole 3 is higher than the fence 43 so as to ensure that water in first drinking water container 42 can overflow from the overflow hole 3 into the overflow water container 44 without being blocked by the fence 43.

Further as shown in FIG. 2 to FIG. 4, a second hollow pipe 47 connects the inner space of the water tank 7 and the overflow water container 44, the first hollow pipe 15 extends downwards to go through the second hollow pipe 47 to connect the pump outlet 112 of the pump 11. The upper end of the second hollow pipe 47 is higher than the first through hole 48 so as to ensure that water in the overflow water container 44 only flows back into the water tank 7 via the first through hole 48.

Further as shown in FIG. 2 and FIG. 4, the first drinking plate 1 has an inner flange 16 surrounding the fountain opening 2, and the first drinking plate 1 also has a second outer flange 17 along its outer periphery, thereby forming a second drinking water container 18 between the inner flange 16 and the second outer flange 17. Further, the second outer flange 17 may include a gap 19 (or lowered section) so that water in second drinking water container 18 overflows into the first drinking water container 42 through the gap 19.

Further as shown in FIG. 2 and FIG. 3, at least one second through hole 46 is formed at the bottom of the first drinking water container 42, and the at least one second through hole 46 is directly communicated with the inner space of the water tank 7. Water in the first drinking water container 42 can directly flow back into the water tank 7 via the at least one second through hole 46. The arrangement of the second through hole 46 advantageously keeps the water level in the first drinking water container 42 at a relatively low level, and minimizes water gushing over the first outer flange 45 when the pet drinks water. If the water level in the first drinking water container 42 rises because the second through hole 46 is blocked by impurities, it can flow back into the water tank 7 through the overflow hole 3.

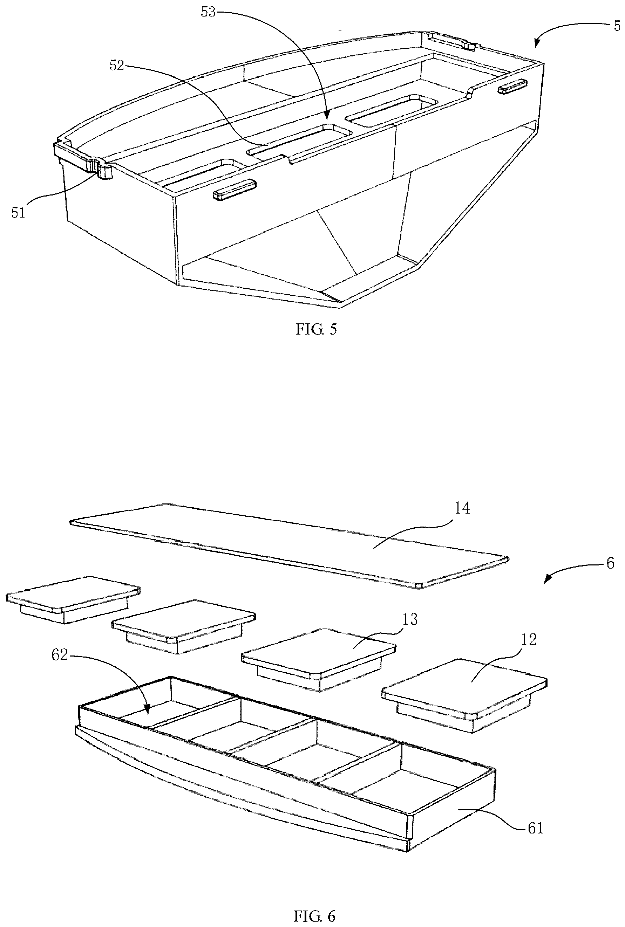

Further as shown in FIG. 2, FIG. 4 and FIG. 5, a filter element frame 5 for containing a filter element 6 is arranged between the at least one second through hole 46 and the water tank 7. Preferably, the filter element frame 5 is detachably attached to the lower surface of the second drinking plate 4 and is positioned below the second through hole 46. In one example, the filter element frame 5 is snapped onto the lower surface of the second drinking plate 4 by protruding elements 51 formed on the two outer sides of the filter element frame 5 and the protruding elements 51 are engaged with corresponding slot elements (not shown in the figures) formed on the lower surface of the second drinking plate 4. As shown in FIG. 5, a recess 53 is formed in the filter element frame 5, and a plurality of third through holes 52 is formed on the bottom of the recess 53. The filter element 6 is disposed in the recess 53. Water in the first drinking water container 42 flows into the recess 53 via the second through hole 46, and then flows back into the water tank 7 via the third through holes 52 on the bottom of the recess 53 after being filtered by the filter element 6.

In one example, the filter element frame 5 is also arranged between the first through hole 48 and the water tank 7. Water in the overflow water container 44 flows into the recess 53 via the first through hole 48, and then flows back into the water tank 7 via the third through holes 52 on the bottom of the recess 53 after being filtered by the filter element 6. The filter element 6 can be positioned below the first through hole 48 and the second through hole 46 at the same time.

Further, as shown in FIG. 6, the filter element 6 comprises a bottom shell 61 and a lid 14, the bottom shell 61 has a plurality of containing cavities 62, and the bottom shell 61 is hot melted or ultrasonic welded with the lid 14 so as to seal the plurality of containing cavities 62. Filter material such as cation exchange resin pouches 12 or coconut shell activated carbon pouches 13 is filled in each of the containing cavities 62, used for filtering water flowing back into the water tank 7.

As shown by the dotted lines in FIG. 4, in one example, a water circulation process of the two-layer pet waterer comprises: water in the water tank 7 being pumped by the pump 11 into the first hollow pipe 15 and upwards, flowing out from the fountain opening 2, and then falling into the second drinking water container 18 on the first drinking plate 1, when the water level in the second drinking water container 18 exceeds a height of the gap 19, water overflows the gap 19 and flows into the first drinking water container 42 on the second drinking plate 4, when the water in the first drinking water container 42 flows through the second through hole 46, and into the recess 53 of the filter element frame 5, and then back into the water tank 7 via the third through holes 52 on the bottom of the recess 53 after being filtered by the filter element 6. Additionally, the at least one overflow hole 3 arranged on the outer sidewall 21 is directly communicated with the inner space of water tank 7. Water overflowing from the first drinking water container 42 may flow into the overflow water container 44 via the overflow hole 3, and then into the recess 53 via the first through hole 48, and then back into the water tank 7 via the third through holes 52 on the bottom of the recess 53 after being filtered by the filter element 6. Then water flows through the polypropylene fiber filter 10 and is pumped into the first hollow pipe 15 again by the pump 11. Thus water circulation is created, and water is cyclically filtered to keep fresh so as to protect health of the pets.

After the present invention adopts the above technical solution, the water drinking area for the pet and the water storage capacity of the drinking plates is increased and can meet the water drinking requirement of the medium and large pets. Furthermore, two layers of the drinking plates are designed, and the drinking plates have different heights, so the small, medium and large pets can choose a proper drinking plate to drink the water according to their heights.

The two-layer pet waterer of the present invention is fabricated by utilizing environmental-friendly food-level plastic, does not cause any damage to the pets and is safe and convenient.

Finally, it should be noted that the foregoing embodiment is merely one example embodiment of the present invention, but does not limit the present invention. Although the present invention is described in detail with reference to the foregoing example embodiment, persons skilled in the art may understand that modifications to the technical solution described in the foregoing embodiment, or equivalent substitutions to some technical features thereof, may be made without departing from the spirit and scope of the invention. Any modifications, equivalent substitutions, improvements, and the like within the spirit and principles of the present invention are intended to be included within the protection scope of the present invention.

## Claims

1. A pet waterer comprising:
a water tank;
a pump disposed in the water tank, the pump having a pump inlet and a pump outlet;
a first drinking plate supported by a second drinking plate, the second drinking plate being detachably connected to a top of the water tank, the first drinking plate and the second drinking plate being adapted to contain a quantity of water;
a first hollow pipe including an upper end that forms a fountain opening and a lower end that extends downward, through the second drinking plate, the fountain opening being connected to the first drinking plate, and the lower end being connected to the pump outlet,
wherein the pump is adapted to pump water in the water tank upwards from the pump outlet into the first hollow pipe and out from the fountain opening into the first drinking plate, wherein any overflow water from the first drinking plate is directed to flow into the second drinking plate.

2. The pet waterer of claim 1, wherein the pump is detachable from the water tank.

3. The pet waterer of any one of claims 1-2, further comprising a filter arranged upstream of the pump inlet.

4. The pet waterer of any one of claims 1-3, wherein the pump includes a low level sensor.

5. The pet waterer of claim 4, wherein the pump either automatically stops when the low level sensor senses a low water level in the water tank or activates an indicator when the low level sensor senses a low water level in the tank.

6. The pet waterer of claim 5, further comprising a transparent window on a sidewall of the water tank and the indicator is viewable through the transparent window.

7. The pet waterer of any one of claims 1-6, further comprising a plurality of foot pads arranged on a bottom of the water tank.

8. The pet waterer of any one of claims 1-7, wherein a surface area of the first drinking plate is less than a surface area of the second drinking plate.

9. The pet waterer of any one of claims 1-8, wherein the first drinking plate includes an outer sidewall that is supported on the second drinking plate, and at least one overflow hole is arranged in the outer sidewall, the overflow hole being fluidly connected to an inner space of the water tank.

10. The pet waterer of claim 9, wherein the second drinking plate includes an outer sidewall and an overflow water container disposed within the outer sidewall.

11. The pet waterer of claim 10, wherein a first through hole is formed at a bottom of the overflow water container.

12. The pet waterer of claim 11, further comprising a second through hole formed in the bottom of the second drinking plate, the second through hole being in fluid communication with the inner space of the water tank.

13. The pet waterer of any one of claims 1-12, wherein the first drinking plate has at least one of an inner flange surrounding the fountain opening and an outer flange along an outer periphery.

14. The pet waterer of claim 13, wherein the outer flange includes a gap for overflow water to flow from the first drinking plate into the second drinking plate.

15. A two-layer pet waterer, comprising a water tank and a first drinking plate arranged above the water tank, wherein a fountain opening is connected with the bottom of the first drinking plate; the fountain opening is connected with a water pipe, and the water pipe is connected with a low-water-level pump; a second drinking plate is arranged below the first drinking plate; the low-water-level pump is configured for pumping water into the first drinking plate, and after the water is full of the first drinking plate, the water leaks into the second drinking plate; a pet can choose the first drinking plate or the second drinking plate by itself to drink the water.

16. The two-layer pet waterer according to claim 15, wherein an overflow hole is arranged in a side wall of the second drinking plate; when the water level of the second drinking plate is higher than the overflow hole, the water leaks into a filter element frame to be filtered by a filter element and then flows into the water tank, and the water in the water tank is pumped into the first drinking plate again through the low-water-level pump so as to form a circulation of the water.

17. The two-layer pet waterer according to claim 16, wherein the filter element comprises a filter element bottom shell having a hollow structure, multiple cation exchange resin pouches and coconut shell activated carbon pouches are arranged in the filter element, and a filter element lid is arranged at the top of the filter element and covers the filter element bottom shell.
